# EUROPEAN PATENT APPLICATION

(11) **EP 0 780 953 A1**
(43) Date of publication of application: **25.06.1997**
(21) Application number: 95120032.8
(22) Date of filing: 18.12.1995
(51) Int. Cl.: H02J 13/00, H05B 39/08, H05B 37/02

(54) **Wireless control system**

(71) Applicant: FLECON MULTI SYSTEM PTE. LTD., Singapore 1411 (SG)
(72) Inventor: Tan, Bee L., Singapore 2367 (SG)
(74) Representative: Meddle, Alan Leonard

(57) **Abstract**

A wireless control system comprising a control device for retro fitting into an existing installation such as a wall switch or the like and a remote controller therefor, the control device comprising: a driver for driving a device to be controlled; a microcontroller for controlling operation of the driver; a power control unit for controlling and converting the incoming power supply to a level suitable for the microcontroller; a memory for storing one or more command codes; and a user interface for receiving the one or more command codes from the remote controller.

## Description

THIS INVENTION relates to a wireless control system and particularly to a wireless control system for retro fitting to existing installations.

A typical AC lighting circuit is usually wired by running a live wire from a power source to a lighting switch and then looping the live wire to every lighting fixture in the same lighting circuit. A neutral wire from the power source does not go to each switch. Instead, the neutral wire is looped directly to all the lighting fixtures in the same circuit as is the earth connection, if required by regulations.

There are known technologies for providing a wireless remote control system which comprise: a) using a radio frequency transmission through air; b) using ultrasonic frequency transmission through air; c) using infra-red frequency transmission through air; and d) using a super-imposed carrier frequency over a power line.

To implement any of the above mentioned technologies without any re-wiring, a semi-conductor switching device has to be installed in place of the normal mechanical lighting switch on, for example, a wall. Such a device requires a power source to drive the electronics circuitry thereof.

The common problems faced in using any of the above technologies to implement a wireless control system without any re-wiring of an existing installation are highlighted below.

Since there is no neutral wire at the lighting switch, there is a problem with tapping power from the AC mains at the switch. Consequently, an external power source becomes the only solution. The only available external power source is battery. Using a battery means that there is a need to replace batteries periodically. This in inconvenient for end users. The total number of lighting switches in a premises which would require batteries make this method impractical.

When using radio frequency through air, there is a limitation on the frequencies available and susceptibility to interference or causing electro-magnetic interference (EMI) to the environment is high. Generally, some means of controlling the electro-magnetic interference has to be built into the electronic device.

Ultrasonic frequency transmission through air is prone to false activation due to extraneous noises and is highly dependent on the type of acoustic conditions in a room.

Using a superimposed carrier frequency over a power line requires a special bulky inductive device connected across the two live terminals of a lighting switch to drive the electronic switching device capable of receiving a superimposed carrier frequency signal over the AC live wire. This superimposed carrier frequency signal would have to be sent from a separate transmitter plugged into a power socket outlet somewhere in the same premises. Accordingly, one drawback of this system is the need for plugging in the bulky device at the AC lighting switch. Further, the bulky device comprises an eyesore in an otherwise aesthetically pleasing interior decor. Moreover, this system can only be used within the same phase of AC power supply, there being a possibility of more than one phase in a premises.

When using infra-red frequency transmission through air, most solutions available in the market require a special device to be retro-fitted at the lighting fixture (which may cause aesthetic practical problems) but the local AC switch on the wall would have to be disabled. Otherwise, as mentioned above, an external power source (normally a battery) is required. This means control is only possible from a remote commander. It also means that every end user has to carry a remote commander all the time. This is inconvenient to the end user.

Regardless of the technology used to implement a wireless control system, remote switches commercially available currently are either not addressable *per se* or are limited to having only two addresses (for example, by dip switch setting).

Non addressable remote switches all have the same address. There is only one signal from the remote commander so that all switches within the transmission range of the remote commander receive the signal. Accordingly, even though it may not be intended by an end user, activation of switches other than the desired switch is possible.

Remote switches which are limited to having two addresses make possible either individual circuit control or master control. However, it is not possible to include sub-master or sub-grouping control of the light switches.

The above described technologies lack the capability of being programmable for time or event based control.

Presently available solutions which do not require re-wiring are mainly for switching lights on and off. There is no provision for a dimming capability (other than manual dimming control) or of being programmable.

The present invention aims to overcome the disadvantages of the known control systems.

Accordingly, the present invention provides a wireless control system comprising a control device for retro fitting into an existing installation such as a wall switch or the like and a remote controller therefor, the control device comprising: a driver for driving a device to be controlled; a microcontroller for controlling operation of the driver; a power control unit for controlling and converting the incoming power supply to a level suitable for the microcontroller; a memory for storing one or more command codes; and a user interface for receiving the one or more command codes from the remote controller.

In order that the present invention may be more readily understood, an embodiment thereof will now be described, by way of example, with reference to the accompanying drawings, in which:
Figure 1 is a schematic block diagram of a system embodying the present invention;
Figure 2 is a schematic block diagram of a control device embodying the present invention;
Figure 3 is a flow chart illustrating operation of the control system; and
Figure 4 is a flow chart illustrating output control of the control system.

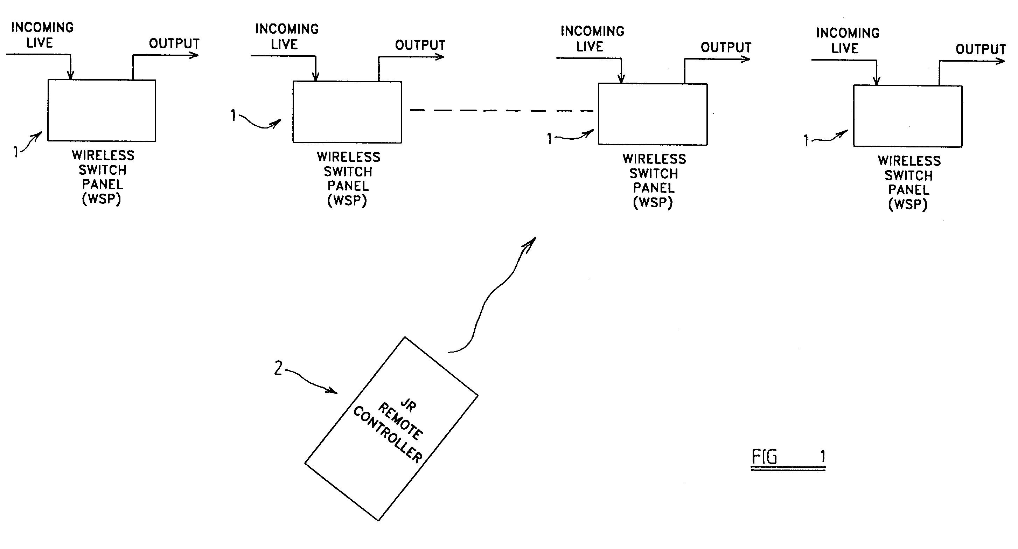

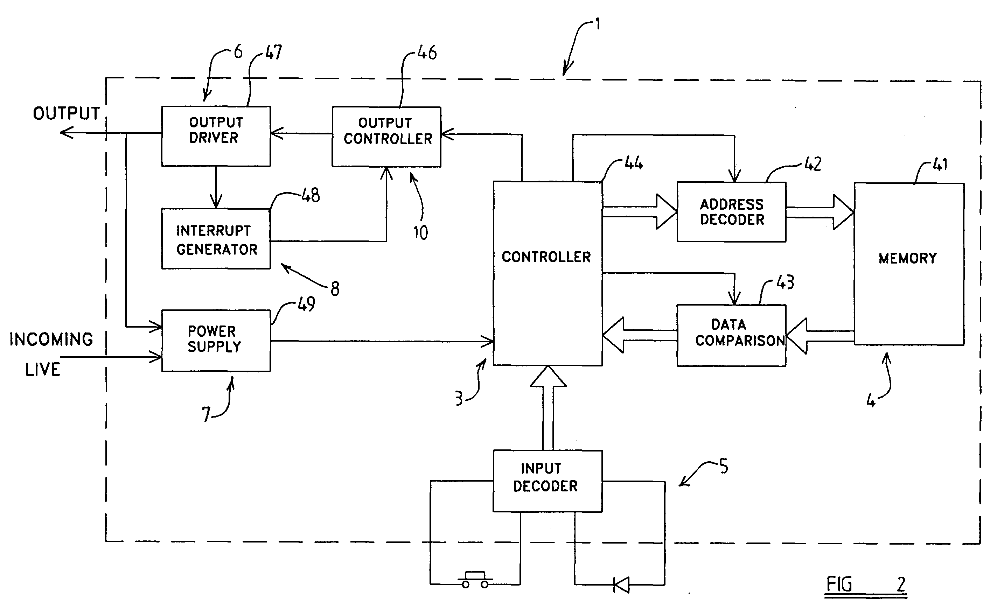

Figure 1 shows a plurality of control devices 1, or wireless switch panels, and an infra-red remote controller 2 for controlling the control devices 1. There is no limit to the number of control devices that may be controlled in the present system. An examplary control device 1 is shown in Figure 2.

Each control device 1 consists of the following component parts: a micro controller 3; a memory 4; a user interface 5; an output driver 6; and a power control unit 7.

The micro controller 3 comprises the brain of the control device 1 and makes any necessary decisions as well as providing a signal processing capability.

The memory 4 which is connected to the micro controller 3 stores all the command and control codes for use in controlling a device to be controlled.

The user interface 5, again connected to the micro-controller 3, comprises a low voltage push button switch (for manual operation) and an infra-red receiver for receiving signals from the infrared remote controller 2.

The output driver 6 comprises an industry standard electronic driver circuit including driving devices such as relays and/or triacs. For example, the driver 6 can be a logic level triac, a snubberless triac, or a relay. When a triac is used, it is driven in quadrants Q11 and Q111 to minimise power consumption.

The power control unit 7 controls and converts the incoming AC voltage to a level which is suitable for the micro controller 3. The power control unit 7 can be plugged in series with a live wire in a similar manner to a switch for controlling electrically operable equipment. The supply is derived directly from 110V/230V mains. No connection to mains neutral is required. Power is derived from the incoming live wire using a similar method to that commonly applied in light dimming systems.

Under normal operations the micro controller 3 will compare a signal received by the user interface 5 from the remote controller 2 with a code stored in the memory to decide which control function is to be performed. Signals received by the user interface 5 are decoded before being passed to the microcontroller 3 by an input decoder 10.

An interrupt generator 8 is provided to monitor the output voltage of the output driver 6 by using the voltage dividing method, the output of the interrupt generator 8 providing feedback to enable synchronisation of an output controller 9 supplying the output driver 6.

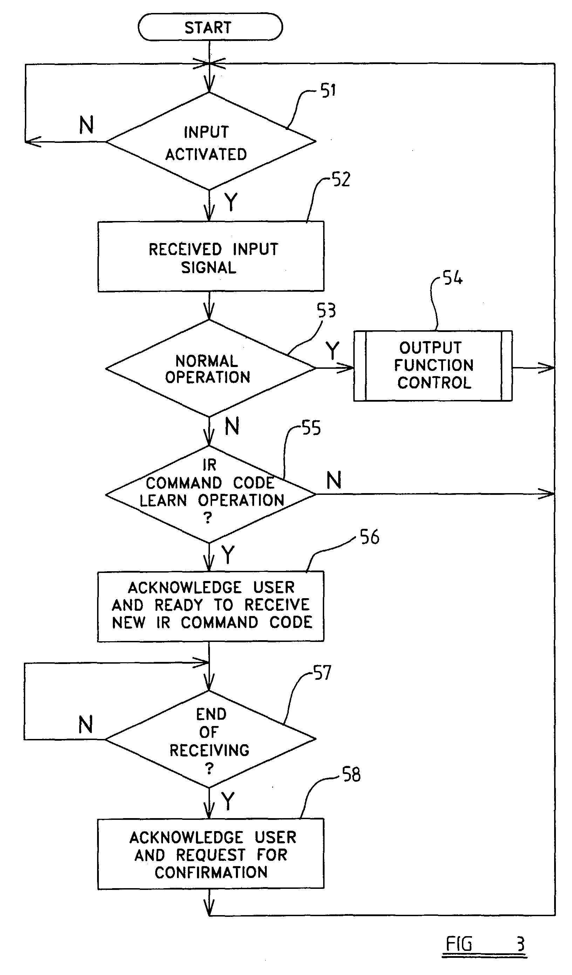

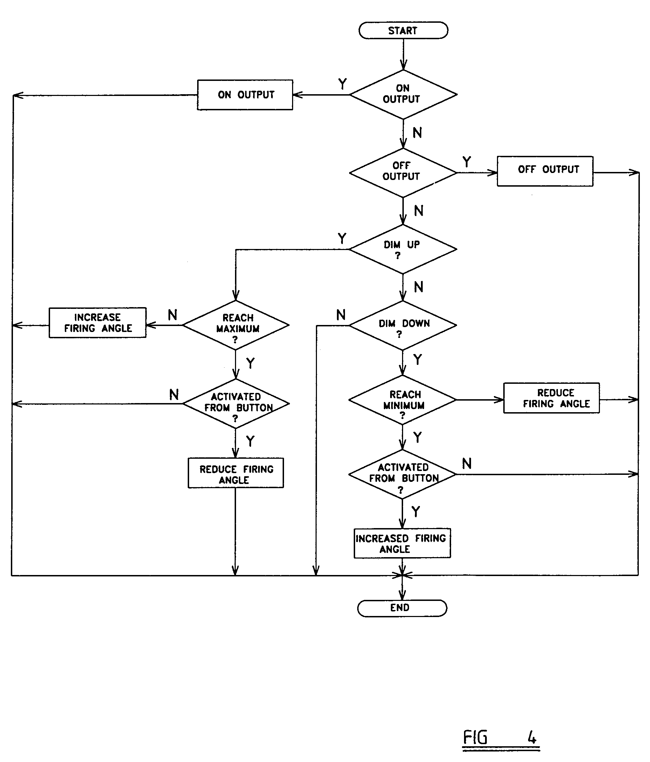

The signals are received by the infra-red receiver in the user interface 5 (step 2 of Figure 3) and the control device 1 decides (step 3) whether the system is under normal operation (step 4) or under learning operation (step 5). If the signal is for normal operation, then the received signal will be compared with the commands and codes stored in the memory 4 and decoded in step 4. A control output will then be issued to the device driver 6 to control the device being controlled. The output function control shown in step 4 is shown in more detail in Figure 4.

If the learning mode is activated (step 6) then the control device 1 will acknowledge the user by indicating on panel on the control device 1 or on the infra-red remote controller 2 itself that the control device 1 is ready to receive a new command.

After reception of the new infra-red command (step 7), the control device will request the user to confirm the change (step 8). This request can be indicated on the aforementioned panel or on the infra-red remote controller 2. The user will then acknowledge the new command by pressing a push button on the control device or on the infra-red remote controller itself.

When the new command is successfully received and confirmed, it is written into the memory 4. The control device will then quit the learning mode and return to normal operation mode.

When a learning mode is activated, the micro controller 3ill receive new command codes from the user through the user interface. After the new command received is confirmed, it will store the command in the memory for use under normal operations. The old command code will then be erased.

The wireless control system embodying the present invention can be retro-fitted into existing installations without the need for a neutral line. Hence, no re-wiring is required.

The control system is able to replace any wall or furniture mounted lighting switch that is commonly used in the interior of residential properties, commercial properties, hotel, hospitals and industrial properties.

The infra-red frequency transmission of control signals to the semi-conductor receiver device, the control device, replaces the function of a typical AC wall switch.

The control device (ireless switch panel)includes the micro controller 3 for controlling a solid state switching device without the use of any inductive device or external power source. The wireless switch panel has the intelligence to learn and recognise control signals from many standard hand held infra-red controllers commercially available on the market. The remote commander 2 is used to transmit infra-red signals to the wireless switch panel to perform the desired controls. The wireless switch panel itself has a switch to allow the same control function locally.

The intelligent control device 1 is able to receive control signals from many remote commanders 2 or other intelligent control devices by infra-red or radio frequency. It is fully programmable and has a learning capability.

The wireless control system is capable of the following functions: turning lights on and off; dimming lights up and/or down; performing a slow glow when turning a light on; performing a fade out when turning a light off; individual lighting circuit controls; multiple group (sub-master) circuits control which is programmable on site; master control for the whole premises from any single command location; time or event based control with programmable scenes; multiple programmable addressing of each wireless switch panel; and controlling any lights in any or all rooms from one single location.

The wireless switch panel is available for recessed mounting, as well as surface mounting and it uses existing standard conduit back-boxes which are commercially available.

The system is designed to be a do-it-yourself product and it is an intelligent system made fully user friendly such that it is a truly do-it-yourself product for a layman.

The above system is capable of expanding to include all other control applications by wireless control in a "smart home" environment. Examples of applications include, but are not limited to: appliances control (time/event based or remote dialling); airconditioning control from the remote commander; audio/video system control from the same remote commander; security monitoring and announcements; auto dial-out announcements; and energy conservation and management.

The push button of the user interface 5 can act as a dimmer switch. Pressing and holding down the button performs the dimming function.

## Claims

1. A wireless control system comprising a control device for retro fitting into an existing installation such as a wall switch or the like and a remote controller therefor, the control device comprising: a driver for driving a device to be controlled; a microcontroller for controlling operation of the driver; a power control unit for controlling and converting the incoming power supply to a level suitable for the microcontroller; a memory for storing one or more command codes; and a user interface for receiving the one or more command codes from the remote controller.

2. A wireless control system according to Claim 1, wherein the remote controller is an infra-red remote controller and the user interface includes an infra-red receiver.

3. A wireless control system according to Claim 1 or 2, wherein a plurality of control devices are provided which are controllable by the remote controller.

4. A wireless control system according to any preceding claim, wherein the device to be controlled is a lighting circuit.

5. A wireless control system according to any preceding claim, wherein the control device has a normal operation mode and a learning mode in which command codes are storable in the memory.

6. A wireless control system substantially as hereinbefore described and as shown in Figures 1 to 4.

7. Any novel feature or combination of features disclosed herein.
